Europäisches Patentamt

European Patent Office

Office européen des brevets

(11) Publication number: **0 168 845**
**A1**

# EUROPEAN PATENT APPLICATION

(21) Application number: 85200227.8

(22) Date of filing: 20.02.85

(51) Int. Cl.⁴: **A 01 K 1/00**

(30) Priority: 29.02.84 NL 8400656

(43) Date of publication of application: 22.01.86
Bulletin 86/4

(84) Designated Contracting States: AT BE CH DE FR GB IT LI LU NL SE

(71) Applicant: **Vandehoek, Frans Barthold, Aan de Greune Paol 32, NL-6127 BJ Grevenbicht (NL)**

(72) Inventor: **Vandehoek, Frans Barthold, Aan de Greune Paol 32, NL-6127 BJ Grevenbicht (NL)**

(74) Representative: **van der Beek, George Frans, Ir. et al, Nederlandsch Octrooibureau P.O. Box 29720, NL-2502 LS The Hague (NL)**

(54) **Cubicle cattle house.**

(57) A new layout for cubicle cattle houses of the bedding-stall type, in particular for dairy cows, is concerned, which is based on a basic cubicle group (2), each basic group consisting of a blind cubicle gangway (5) running at right angles the singles passageway (4) at one side only of the cowhouse and connecting with it, and a limited number of cubicles (6) disposed on either side thereof. Cattle prefers to be stalled in small units along a blind gangway, which thus improves peace and consequently milk production. By reducing each basic group (2) to approximately 10 (12) milk producing cows, sufficient feed space is available at a feed gate, if used. By consequently using said basic-group-layout, the building becomes simple, it is very flexible as to over-all-layout of a complex and to adaption to younger cattle, calves, service facilities and to each known feed system. As to the manure storage the new cattle house is advantageous, with respect to design and environmental requirements.

Cubicle cattle house

The invention relates to a cubicle cattle house, in particular for dairy cows, provided with:

- a number of adjacent raised cubicles combined into a group, which are furnished with mats and are of standard dimensions for one animal per cubicle, and which are separated from one another and bounded on three sides by standard railings;

- lower-level cubicle gangways of standard width, possibly made of grids, and running along the open side of each cubicle group;

- a passageway of standard width, made of grids, running lengthwise along the cowhouse, connecting with each cubicle gangway, and being bounded on the side facing the cubicles either by a feeding rack, or by a closed gate or wall to serve purely as a passageway in the case of self-feeding;

- and means for manure removal disposed at least underneath all gangways made of grids.

Cubicle cowhouses of the bedding-stall-type described above are made in numerous forms and dimensions. They are described, inter alia, in various Pamphlets for Agriculture published by the Ministry of Agriculture and Fisheries, e.g. No. 384, (available from the Consulentschap voor Boerderijbouw- en -inrichtingen - Advisory Board for Farm Buildings and Equipment, at Wageningen). This publication gives not only a number of standard dimensions, designed for Dutch breeds of dairy cattle, such as for adult cattle a cubicle measuring 110 x 220 cm, a widthe of 220 cm for possible gangways between the cubicles, and 300 cm width for a passageway running along the feeding rack. A feeding width of 60-65 cm per animal is recommended for group feeding, where all the animals in the cowhouse have to be able to feed simultaneously along the feeding rack. In the case of store feeding via, say, a conveyor belt, a feeding width of 20-40 cm per animal is adequate, while in the case of self-feeding from clamp silos, generally situated outside the cowhouse, a feeding width of 15-20 cm per animal is considered adequate. Both in practice and according to the above-mentioned Pamphlet, the cubicles used are located in rectangular sheds of various sizes, in many cases also accommodating the milking parlour with milking machines, the milk processing equipment and milk storage, the office and in many cases a sickhouse, a calf area and a calving house. Although this type of cowhouse is used for about fifty cows upwards, it is intended in particular and used in practice for large herds of 100 or more cows. In the larger cowhouses in particular, it appears that the specified feeding width per animal provides inadequate space at the feeding rack for all cows to feed simultaneously. The result of this is unrest in the cowhouse and too little feed left for the animals low down on the list. Of course, this has an adverse effect on the milk production, while the circulation in the cowhouse through the passageways, in particular in the cubicle gangways, is a further source of unrest. This generally used type of cowhouse also has relatively long trusses and, with the stipulated minimum angle of gradient for the roof, the ridge is fairly high, so that one has large, expensive cowhouses, which may also disfigure the landscape. Any extension is therefore generally lengthwise, which only serves to aggravate the above-mentioned problems of unrest and unequal feeding. The set-up with the relatively long trusses is also expensive, partly because of the need to make it strong enough to resist wind and weather in the open countryside.

Another problem, which is sometimes serious, is that high-yielding animals, which need more feed and/or more selective feeding, cannot in practice be fed satisfactorily, at least not without using complex feed concentrate machines, compared with the needs of the moderate-yielding group and the low-yielding group or even temporarily dry cows.

Partly because of the large dimensions of the cowhouses, manure removal pits or channels are generally provided only underneath the grid-type gangways, in order to save on costs. The result is that the manure storage area is so small that the manure has to be removed frequently. This manure removal will be reduced to two to three times a year in future, under the Nuisance Act permit scheme. This manure is generally spread on the land, so that the latter can be overfertilised, resulting in possible soil and ground water pollution. Another factor is that - again to cut down on costs - it is often only the cowhouse floor which is on foundations at ground level and/or supported on piles, while the lower down manure pits are not. In soft ground they can easily sink, so that leaking manure pits are more often the rule than the exception. In view of ground water pollution and general environmental regulations, this is a very undesirable situation, because the manure often contains excesses of ammonia or nitrates.

Because of the size of the cowhouses described above, these modern cowhouses are therefore in practice used mainly for large herds of around 100 and over cows. The large number of medium-sized dairy farms with around 30 to 100 animals generally cannot afford the necessary capital outlay for this design of cowhouse, and they are continuing to use old-fashioned, stuffy, damp and warm cowhouses. However, cattle bred in recent years thrive best and remain healthiest in airy, well-ventilated cowhouses, which should be cold rather than warm. There is even an increasing use of houses with an open front all along one side of the house.

In order to find a solution to the above problems, and in particular to produce a type of cowhouse which is suitable also for medium-sized herds of around 30 to 100 cows, and is reasonably economical, according to the invention there is provision for the following:

- a cowhouse complex consists of one or more cowhouse units;
- a cowhouse unit essentially comprises only one passageway on one side, with at least one basic cubicle group adjacent to it, said basic group consisting of a blind cubicle gangway running at right angles to the passageway and connecting with it, and a limited number of cubicles disposed on either side thereof;
- in the case of more than one basic group per cowhouse unit, each subsequent group is situated adjoining the one before, at the passageway;
- there is a service centre, which is located outside the cowhouse unit, at least partly adjoining it.

According to the invention, one no longer uses one large cowhouse, but the latter is divided up into one or more smaller cowhouse units, as required. Each cowhouse unit consists essentially of one passageway, along which one or more adjacent basic cubicle groups are disposed. Each basic cubicle group consists of a blind cubicle gangway running at right angles to the passageway and connecting with it, and of a limited number of cubicles disposed on either side thereof.

On the basis of the standard dimensions applying in the Netherlands, it appears that with 2 rows of 5 cubicles per basic cubicle group, and using the desired 220 cm wide cubicle gangway between the cubicles facing each other, one obtains a feeding rack which is 660 cm long and thus for the ten cows involved precisely meets the standards for the feeding width for group feeding. Per basic group, each cow therefore has its own sufficiently wide feeding place. Moreover, there is much less need for them to pass each other when they go from cubicle to feeding rack and back. This makes for much greater peace in the cowhouse.

There can, of course, be several basic groups disposed adjacent to each other along one passageway, with each basic group being exactly the same as the one before, and therefore meeting the current standards in the optimum way. It will be clear that in the case of other cattle breeds or newly bred types for which other dimension standards apply, the basic idea of the invention is, of course, easily adaptable, with suitable dimensions.

It will also be clear that a cowhouse unit according to the invention, consisting of one or more adjacent basic cubicle groups disposed along one passageway, can essentially be of any length, but the building and use of it will generally be more pleasant if the entire cowhouse is made up of more than one, not too long, cowhouse unit. These cowhouse units can then be sited in relation to one another as one wishes, for example adjoining a central separate building for the services, such as milking, calving, the sickhouse etc. Two cowhouse units can also be built against each other, which means that from the outside they look like the known cowhouses, but they have a lower roof and in the inside and,with regard to ruming/them retain all the advantages of the basic cubicle groups according to the invention, situated along one passageway belonging to them.

As will be explained in greater detail in the claims and with reference to the drawings, the basic cubicle group is also easily adaptable for young animals, while in the case of self-feeding, where the cows eat outside the house and the passageway of each cowhouse unit is used only as a gangway, and not also as an eating place along a feeding rack, this passageway can be made narrower, so that even for adult cows each basic group can be extended by two cubicles to two rows of six animals. For young animals, this can go up to two rows of seven or two rows of nine, or even more in the case of very young animals.

On the basis of the dimensions applicable for Dutch cattle, a basic cubicle group with the accompanying passageway therefore requires a ground area of about 660 x 850 cm. This can best be roofed with trusses 850 cm in length and at intervals of 330 cm, so that for each basic group one requires two trusses, plus one principal rafter at the end of the cowhouse unit. With these dimensions, the trusses can still be lightly constructed, they are easy to handle, and they are therefore relatively cheap to buy and erect.

By using the foldaway closing or guide rails which are known per se, and using the basic groups according to the invention, high-yielding animals can easily be kept separate from lower-yielding ones, as far as the necessary feeding is concerned.

Since each cowhouse unit is relatively small compared to known cowhouses, it is possible at no extra cost to have a building in which there is a manure pit underneath the entire cowhouse unit. Into an excavation about 1 1/2 metres deep is poured a concrete floor, forming one integral unit, and having all around it an upright wall, so that a liquid-proof basin is formed. With the necessary passages for the circulation of the manure, two bearing walls are incorporated lengthwise, for example, in brickwork. The whole structure is covered with loose standard elements, either gangway elements made of grids, or closed and raised cubicle elements. The latter are, of course, provided with recesses or other fastening means, known per se, for the cubicle railings and their adaptation for adult animals, younger animals or calves. As a result of this design, the manure pit is a liquid-proof basin, which in many cases can float in the ground and the ground water, so that no pile foundation is necessary. There is also such a large capacity that, with a pit depth of 1 1/2 metres, removal of the manure can be limited to 2 to 3 times a year, and even less for greater pit depths. The cowhouse units according to the invention therefore permit farming with much less pollution than the known system.

Finally, the cubicle cowhouse according to the invention also has advantages on ethological grounds over the known cowhouses. It already appears from trials carried out so far that dairy cattle prefer to be housed along a blind gangway and in relatively small units. The blind cubicle gangway per basic group meets this in the optimum way, while the two rows of five or two rows of six cubicles per basic group constitute the desired small unit. Moreover, in the passageway animals can sidestep other dominant animals more easily by moving into a cubicle gangway; they do not need to use a cubicle to get out of the way, so that the cubicles remain available for resting and chewing the cud.

Apart from the great flexibility in architectural terms which is possible with the cowhouse units according to the invention, and apart from the fact that fewer square metres per cow are needed, running the business is also easier. Another advantage is that the limited truss dimensions and the limited height make it possible for the farmer to build it himself up to a certain extent, if building regulations permit it.

Other advantages of the invention, and in particular examples of the great flexibility which is possible with the system, will be explained in greater detail in a description of a number of preferred embodiments according to the invention illustrated as examples in the drawings.

Figs. 1a to 1c show respectively a cross section, a horizontal section through the manure pit and a floor plan of the layout of an open-front cowhouse according to the invention for adult cows.

Figs. 2a to 2b show respectively a three-dimensional schematic top view and a floor plan of a cowhouse complex of the open-front type in one of the many possible layout variations.

Fig. 3 shows a floor plan of the same cowhouse complex for the same number of adult cows as in Fig. 2b, but as an example, differently grouped.

Figs. 4a to 4d show respectively a cross section, a horizontal section through the manure pit, a floor plan of the basic layout, and a cowhouse complex of the type for self-feeding, situated as desired, and intended for adult cows.

Figs. 5a and 5b show a cross section and a floor plan of a cowhouse complex, built of two cowhouse units of the open-front type in a linked construction facing each other, and intended for adult cows.

Figs. 6a and 6b show possible layouts based on the basic layout according to the invention for adult cows, half-grown cows and young animals.

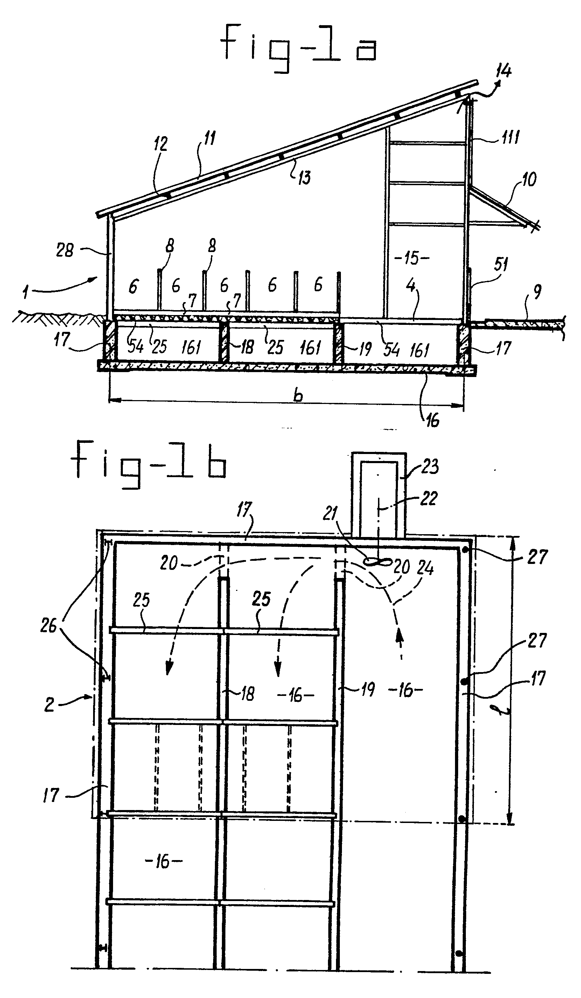

In all the drawings, corresponding parts have the same reference figures and if their form or function differs a little, they are followed by the figures 1,2,3 etc. The same reference figures always have the same function in all figures and indicate essentially the same design.

A cowhouse complex according to the invention is made up of standard cowhouse units 1, containing one or more basic divisions 2. These basic divisions 2 always have the same dimensions, a width b and a length 1. For the normal dairy cow in the Netherlands, the width b is 850 cm and the length 1 is 660 cm, based on the standards laid down and generally accepted for the present type of Dutch cow. For adult dairy cattle, the cubicle 6 must have a centre-to-centre measurement of 110 x 220 cm, the width of a gangway 5 between the cubicles must be 220 cm, and there should be a width of 300 cm for a passageway 4 along a feeding rack 51 and of 190 cm for a passageway 4 in the case of a cowhouse equipped for self-feeding.

For adult cows, the invention provides for two rows of five cubicles 6, thus for 10 animals, per basic division. Together with the cubicle gangway 5, this therefore produces a length 1 of 660 cm centre to centre per basic group 2, and together with the passageway 4 a width b of 850 cm centre to centre. On the side facing away from the cubicles, the passageway 4 is closed by a feeding rack 51 or a gate or wall 112 in the case of a cowhouse designed for self-feeding of the animals. In this case two cubicles 6 can be added per basic group, so that the number of cows per basic group becomes 2 x 6 = 12.

If there is a feeding rack with a feeding passage 9 or 92 and two rows of 5 adult cows per basic group, at a feeding rack 660 cm long there is therefore centre to centre 66 cm feeding width available per cow, which on deduction of the thickness of the material comes out at about 63 cm, therefore complying with the standards. Such a basic group can be roofed with trusses 850 cm long which, in view of the relatively small width between supports, is very simple to carry out. In order to keep the girders running lengthwise simple, it is desirable to provide each basic group with two trusses at intervals of 330 cm. A cowhouse unit with X basic groups therefore requires 2X trusses, plus one principal rafter, all placed at the same interval of 330 cm. This means that the roof covering 11 can, for example, be standard corrugated sheets, alternated with translucent sheets. For good ventilation, the roof covering should preferably not directly connect with the vertical walls 28 and 111, at least on one side, but preferably on two sides. Of course, other types of roof are also possible according to the invention, such as saddle roofs, roofs with "open" ridge etc., provided that good ventilation remains possible.

The cubicles 6 are each provided with raised lying elements, furnished with a soft covering, such as a rubber covering, in order to prevent sores and wounds in the animals. Between the cubicles 6, there are standard railings 8 along three sides of each cubicle. All cubicles are open so that the animals are free to go in and out to the blind cubicle gangway 5 concerned. Each passageway 4 and all cubicle gangways 5 are made of standard floor elements provided with grids.

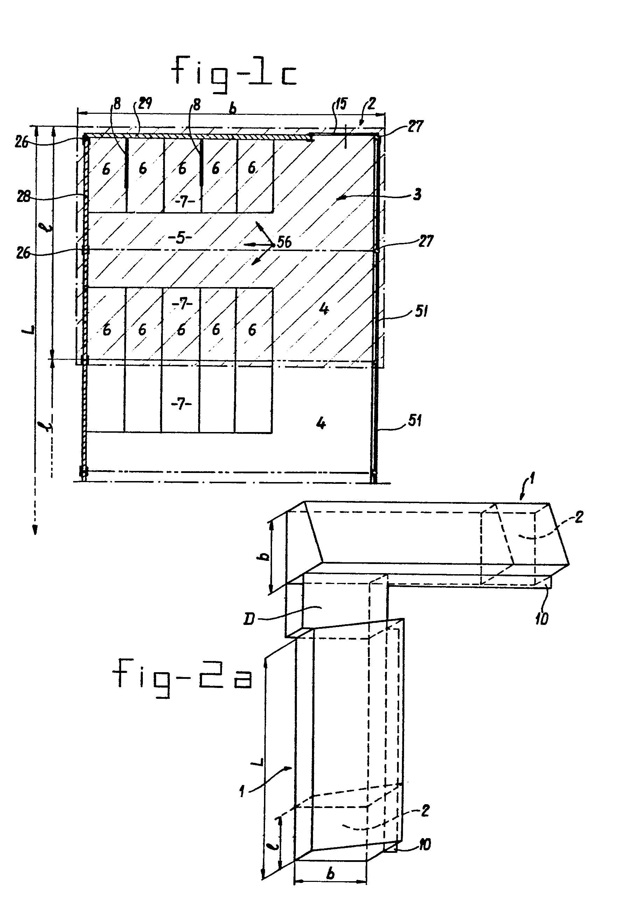

In order to illustrate a basic group, Fig. 1c shows such a group hatched and provided with reference figure 3, and also surrounded by a dotted/dashed line. In Figs. 1a and 1b, one can see the construction of the foundation and the manure pit which is closely connected with the whole invention. The cowhouse unit 1 has its foundation on a moisture-proof concrete slab 16, with liquid-proof longitudinal and end walls 17 disposed around the periphery. The depth of the manure pit 161 is about 1 1/2 metres, but the depth can easily be adapted to local requirements. Two supporting walls 18 and 19, running lengthwise, are provided at such a distance from each other that standard concrete beams 25 are placed on the longitudinal walls at such intervals that standard floor panel elements fit on them. Fitted at the cubicles on each basic group 2 are closed, raised and covered cubicle floor panels 7, between which there are grid-shaped gangway elements at cubicle gangway 5 and passageway 4. In the supporting walls 18 and 19, the necessary recesses 20 are kept free to achieve regular circulation of the manure, using a schematically illustrated circulation pump 21; 22 which can be disposed at various points in a readily accessible individual well 23, said circulation being indicated schematically by the arrows 24. This circulation prevents the precipitation of certain components of the manure and possible accumulations and blockages arising therefrom. The capacity of the manure pit 161 must be so great that no outside manure storage is needed. Reference figure 54 schematically shows a gangway floor element made of grids. The open-front cowhouse shown in Figs. 1a to 1c and also in Figs. 2a, 2b and 3 has, outside the feeding rack 51, a feeding passage 9 at ground level, which may or may not be provided under a lean-to roof 10, on which the feed is placed for the feeding rack 51. The open front is closed off at the top with partially or fully translucent sheets 111, while at the point where these sheets join the roof construction 11, 12, 13, vents 14 are provided. If required, vents (not illustrated) can be provided between the low longitudinal wall 28 and the roof. At the low side via a reinforced corner, each truss 13 has a principal rafter 26 and, on the high side it is placed on preferably tubular columns 27. The latter are rounded and at the feeding rack will have less risk of injuring the animals and will prevent the accumulation of feedingstuff. In Fig. 1c the arrows 56 indicate a basic cubicle group. As can be seen from Figs. 1b and 1c, several adjacent basic cubicle groups 56 can be placed after one another to form a cowhouse unit. The length L of a cowhouse unit thereby becomes a multiple of the length 1 of a basic cubicle group.

Figs. 2a and 2b show the same type of cowhouse complex, consisting of two open-front cowhouses, which are placed at right angles to each other and are connected by a service building D. One of the cowhouse units is for 30, and the other for 40, adult cows. Again, they are cowhouses with a feeding rack 51 and a feeding gangway 9 under a lean-to roof 10. At the two free ends of the cowhouse units there are large doors 15 in the end walls 29, which form the connection with the surroundings. As can be seen from the drawing, part of the service area D is accommodated in an end part of the one cowhouse unit and is based on the same basic pattern, namely with a basic group length 1 of 660 cm for the milking parlour D3, suitable for simultaneous milking of 2 groups of 4 cows, with alongside it the circulation passage D5, while the milk room D2 with the milking machines and cooled milk storage together with a pair of calving pens D4 are accommodated in a last half basic group measuring 330 cm long. The connection between the two cowhouse units is a waiting room D1, which can be of any desired size, and in this case is for around 46 cows. Automatic guidance of the cows from and to the milking parlour D3 is possible in the known manner, by means of schematically shown doors 151 which revolve in one direction, and by guide railings, which may or may not be movable, and are schematically shown by dotted/dashed lines in the service room D.

Fig. 3 shows a different cowhouse complex from that illustrated in Figs. 2a and 2b, intended for the same number of cows and with a corresponding layout. On the basis of the examples from Figs. 2 and 3, it will be clear that these and many other ground plans can be achieved with the cowhouse units according to the invention. They can easily be adapted for, for example, an expanding farm.

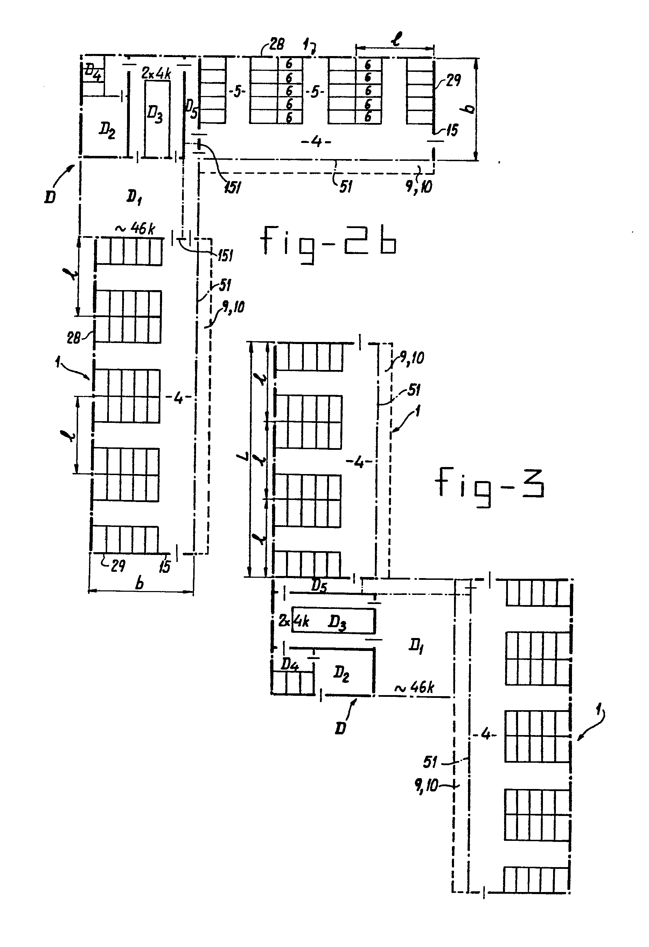

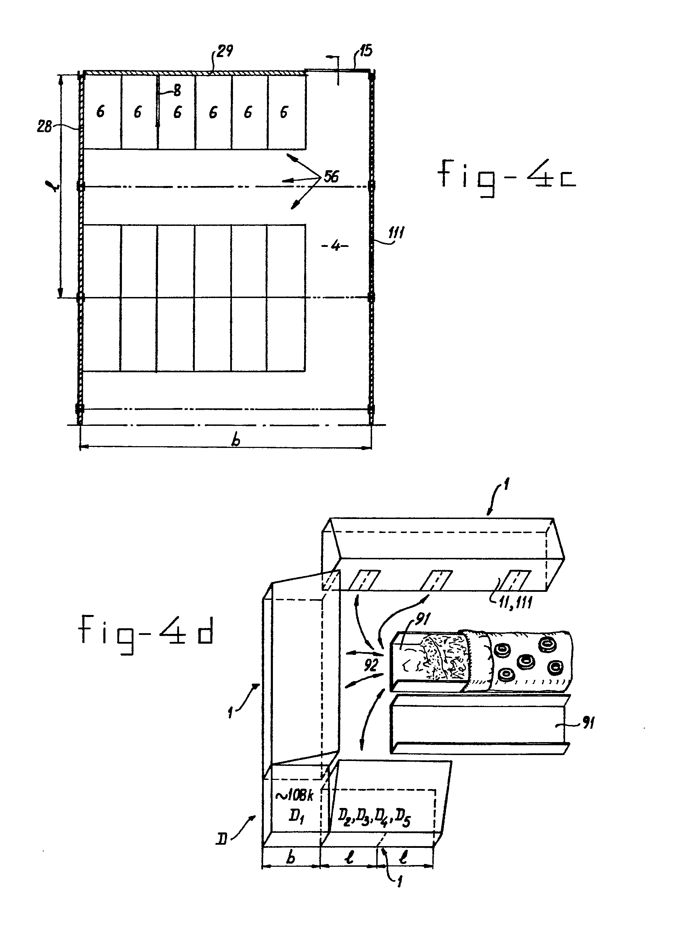

Figs. 4a to 4d show a cowhouse complex which is essentially the same as that of the previous drawings, and of which the corresponding parts require no further explanation. This cowhouse complex is, however, of the type for self-feeding of the cows. The feeding rack 51 at the passageway 4 is therefore replaced by a more or less closed gate or wall 112. Since in this case animals only pass along the passageway 4 and do not stand there to eat, the width can be reduced to that of a cubicle gangway. This means that one gains two cubicles 6 per basic group 56, so that in cubicle cowhouses with self-feeding 12 adult cows per basic group can be accommodated. Since there is no open feeding rack 51 for ventilation, as in the open-front type of cowhouse, extra vents 141 have to be provided at the low side.

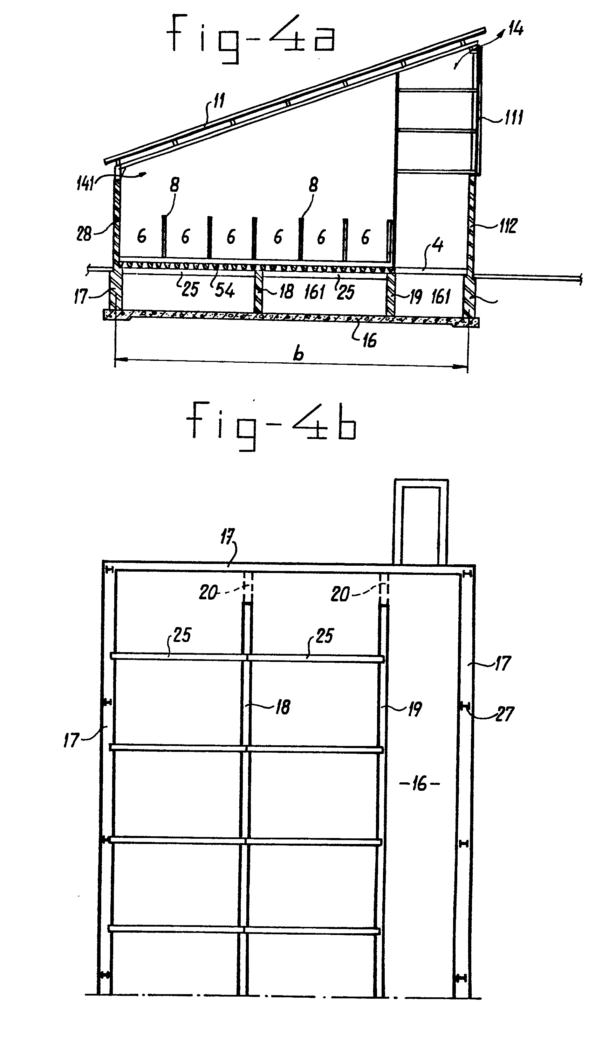

They can be provided with shutters to prevent draughts.The pattern of the manure pit according to Fig. 4b is the same again, but the positioning of the partition walls 18 and 19 has to be adapted to the type of cowhouse with 6 cows next to one another. Fig. 4d gives a three-dimensional bird's eye view of a cowhouse complex with two cowhouse units 1 of the type for self-feeding and a service building D. The latter is again designed in such a way that the waiting room D1 for around 108 cows can be chosen in any desired size, while the milking parlour D3, the milk room D2, the cubicles D4 and a passageway D5 are again accommodated in two basic rooms. Fig. 4d also shows two clamp silos 91, in which ensilaged winter feed, such as grass, is stored, covered by canvas, and often held down with ballast, as shown schematically in the drawing. The covering is partially thrown back from the feed at one or both ends, so that the animals can pass freely via the schematically illustrated route 92 from their cowhouse cubicle to the clamp silo 91 to eat there and then return. This type of cowhouse has the advantage that it is less labour-intensive for the farmer, but has the disadvantage that the feeding of the animals and the quality of the feed can be adversely affected by the weather.

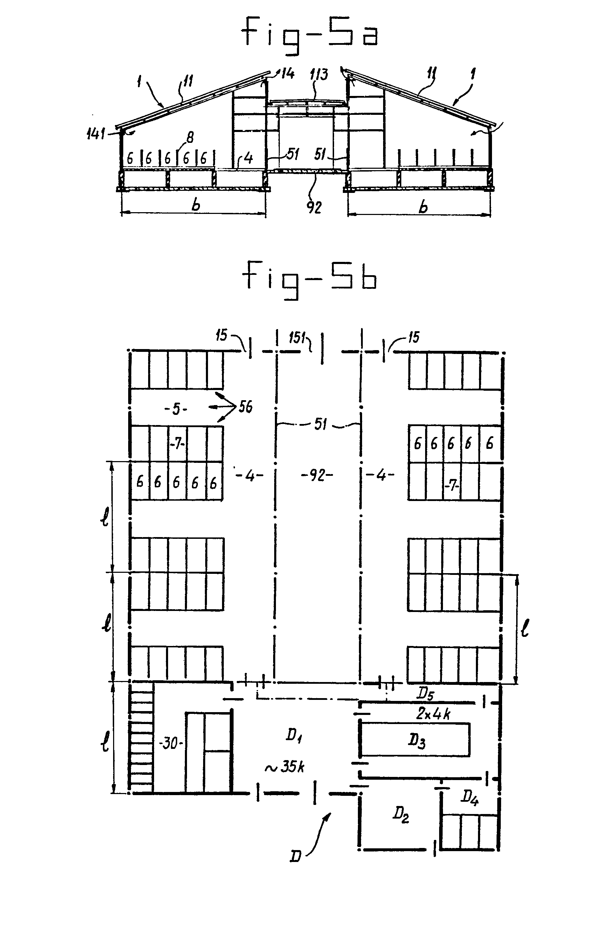

Figs. 5a and 5b illustrate a cowhouse complex of the type with feeding gangway 92, again made up of two cowhouse units according to the invention. The two cowhouse units are sited with their open feeding racks 51 facing each other, with the feeding gangway 92 sandwiched between them. This feeding gangway 92 is preferably covered with a roof 113, above which light can be admitted to the two cowhouse units, and in which there are vents 14. Since this is again a cowhouse with feeding rack, the passageway 4 is wide and only 5 adult cows stand next to each other. As can be seen from the floor plan of Fig. 5b, the service building D is largely accommodated in end parts with standard length 1 or 1 1/2 1, as an extension of the two cowhouse units. The waiting room D1 in this example is intended for around 35 cows, so that there is room left in the cowhouse unit shown on the left for, for example, a number of calving pens 30.

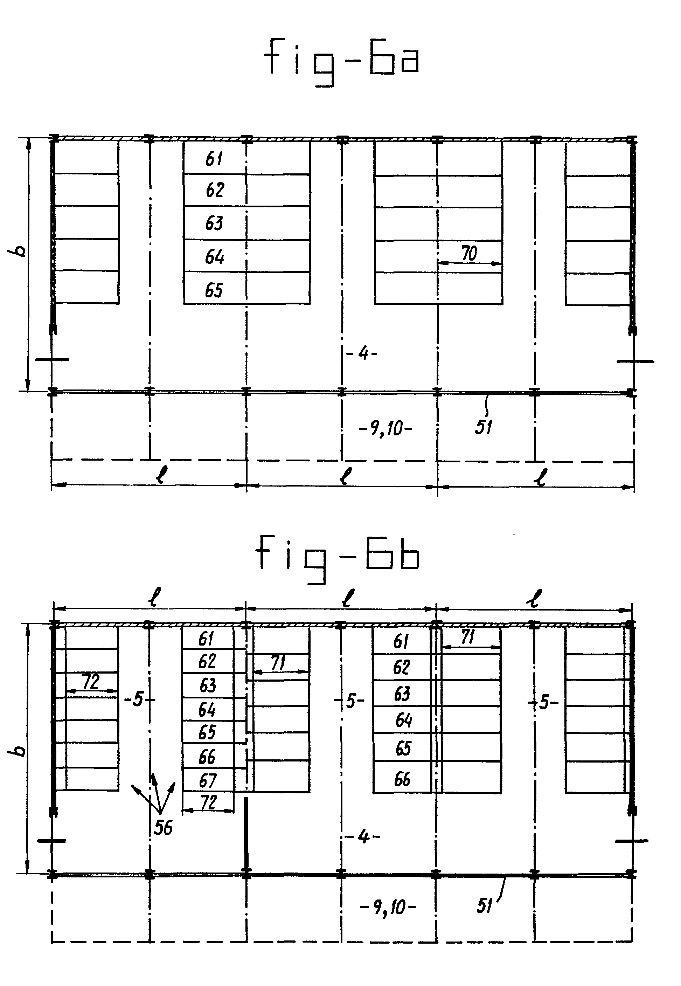

Figs. 6a and 6b schematically illustrate two identical open-front cowhouses with feeding rack 51, like the top cowhouse in Fig. 2b. Fig. 6b shows the basic layout for adult cows with standard cubicle length 70. In Fig. 6b the same cowhouse has the two righthand basic groups arranged for somewhat older young animals, with 6 being able to stand side by side, this being indicated by 61 - 66. Their cubicle length 71 can be shorter because when they stand up to defaecate, their dung also lands on the cubicle gangway 5 which is made of grids, and then falls through the grids into the manure pit, so that the cubicles are not soiled. For this purpose, the ironwork between the cubicles at the top end is adapted as schematically shown in Fig. 6b. The left basic cubicle group has even 7 small cubicles, numbered 61 - 67, which are provided for young animals with an even shorter cubicle length 72. The railings at the top end are for this purpose provided further up towards the cubicle gangway 5. The feeding width at the feeding rack can be adapted for younger animals, in exactly the same way as in the case of the cubicles. Again, each animal has sufficient feeding space to enable it to eat at the feeding rack 51 simultaneously with the others. In order to avoid mixing young animals and older animals, it may be desirable to position removable railings along the passageway 4 to separate the groups. A comparison of Figs. 6a and 6b shows how flexible the basic cowhouse according to the invention is: the basic principle of the foundation and the manure pit and of the building with the trusses always remains the same.

Standard cubicle floor panels are already commercially available with a number of recesses at such points that the railings can be positioned as desired for various age groups from young animals to adult animals.

It can be seen from the examples described above how flexible the building system according to the invention is, based on the basic cubicle groups. Thanks to the standard measurement principles, all the necessary building elements are easy to supply from stock, as is already the case with the trusses, roofing sheets etc. The same applies to the cubicle elements and the concrete grids for the gangways.

Thanks to the fact that the manure pit forms one large liquid-proof basin, it can be provided in soft, wet ground, "floating" in the ground water. An expensive foundation is not necessary in many cases. In view of all the above arguments and the fact that extending or placing a new cowhouse unit can be carried out relatively quickly, cheaply and easily, this type of cowhouse is extremely well suited to medium-sized dairy farms, but can equally be used for small and also the largest farms. The cowhouses do not become increasingly large, although their length can increase, but the floor plan layout can be adapted to the local situation, both as regards the condition of the site and, for example, the exposure to wind and sun. The cowhouses need not be higher than the standard measurement, unlike the present cowhouses, which always increase in height as the width increases.

The basic layout of the cowhouse is a cubicle group for 10 adult cows in crosswise positioned cubicles, where the group accommodation (in the case of Dutch animals) takes up a ground area of 660–850 cm. In the case of self-feeding, the basic group comprises a cowhouse with 12 cows. Since the standard feeding racks 325 cm wide can be installed between the principal rafters, it is possible to have a disposable feeding width of 63 cm per cow. Service rooms can also be accommodated within the construction, as described above.

The construction is designed to the measurements for group accommodation of 10 or 12 adult cows. Many cowhouse layouts are thereby possible, and the animals can be separated from one another if necessary, for example in the case of high-yielding and lower-yielding cows, young animals, dry cows etc., always by a multiple of 10 animals.

Owing to the light construction, it is relatively simple and cheap to provide an extension, possibly building it oneself using standard building kits.

These cowhouses are also readily adaptable in areas with a high landscape value, because the external dimensions are small and, by connecting cowhouse buildings, one can have a varied building capacity which is easily combined with existing farms.

Recent ethological research has also shown that cows prefer a layout in small groups with a blind gangway, rather than large "undefined" rooms. All this promotes restfulness in the cowhouse, and thus the well-being of the cows.

Of course, alternative roof types and front finishes are possible, while it has already been demonstrated that with the same measurements and details, dairy cowhouses can be rearranged to accommodate young animals and vice versa.

Cowhouses according to the invention are also simple to convert from the group feeding type with feeding rack to the self-feeding type with two cubicles more per basic group, or back.

If desired, a cowhouse of the type with feeding rack and lean-to roof can also be converted to accommodate 6 more adult cows per basic group length, if under the lean-to roof outside the feeding rack 6 cubicles in each case are placed next to each other, these cubicles are closed off by an outside wall and the feeding rack is removed, so that for all cubicles a cowhouse of the self-feeding type is produced, with 60% more cows, this gain being obtained by combining one of the better classic arrangements with
that according to the invention.

## CLAIMS

1. Cubicle cattle house, in particular for dairy cows, provided with:

- a number of adjacent raised cubicles combined into a group, which are furnished with mats and are of standard dimensions for one animal per cubicle, and which are separated from one another and bounded on three sides by standard railings;

- lower-level cubicle gangways of standard width, possibly made of grids, and running along the open side of each cubicle group;

- a passageway of standard width, made of grids, running lengthwise along the cowhouse, connecting with each cubicle gangway, and being bounded on the side facing the cubicles either by a feeding rack, or by a closed gate or wall to serve purely as a passageway in the case of self-feeding;

- and means for manure removal disposed at least underneath all gangways made of grids, characterised in that:

- a cowhouse complex consists of one or more cowhouse units (1);
- a cowhouse unit (1) essentially comprises only one passageway (4) on one side, with at least one basic cubicle group (56) adjacent to it, said basic group (56) consisting of a blind cubicle gangway (5) running at right angles to the passageway (4) and connecting with it, and a limited number of cubicles (6) disposed on either side thereof;
- in the case of more than one basic group (56) per cowhouse unit (1), each subsequent group is situated adjoining the one before, at the passageway (4);
- there is a service centre D, which is located outside the cowhouse unit (1) at least partly adjoining it.

2. Cubicle cowhouse according to Claim 1, characterised in that a basic cubicle group (56) for adult cows comprises 2 rows of 5 cubicles (6) where a feeding rack (51) is used, or 2 rows of 6 cubicles where a closed gate or wall (112) is used for self-feeding, going up to 2 rows of 7 or 2 rows of 9 or more cubicles (61 – 67; 61 – 69) per group (56) in the case of young animals.

3. Cubicle cowhouse according to Claim 1 or Claim. 2, characterised in that, based on the standard centre-to-centre measurements fixed for Dutch dairy cows at 110 x 220 cm per cubicle (6), a width of 220 cm for a cubicle gangway (5) and a width of 300 cm for a feeding rack passageway (51,4) and of 190 cm for a self-feeding passageway (91,4), each basic cubicle group (56) with its part of the passageway (4) has a floor area of about 660 x 850 cm, which can be roofed with two trusses (13) 850 cm long, at intervals of 330 cm, plus one principal rafter at the end of the cowhouse unit.

4. Cubicle cowhouse according to one or more of the preceding claims, characterised in that provision is made underneath the entire cowhouse unit (1) in the lengthwise direction for three manure pits (161) side by side, separated by bearing walls (18,19), with the necessary passages (20) for continuous circulation of the manure, and located on one continuous, impermeable floor (16), which is surrounded by an impermeable wall (17), and the manure pits (161) are covered at the top by gangway elements (54) made of grids, and by closed cubicle elements (7).

5. Cubicle cowhouse according to one or more of the preceding claims, characterised in that:

- for the formation of a larger cowhouse complex, two cowhouse units (1) are placed with their passageways (4) parallel to and facing each other on either side of a central passageway (92);

- the roofings (11, 111) of the cowhouse units (1) over the feed gangway or feeding device are connected to each other to give waterproofing, but still provide ventilation (113, 114).

6. Cubicle cowhouse according to one or more of the preceding claims, characterised in that the feeding rack (51) also forms the open closure of an "open-front" cowhouse, with a lengthwise feedway (9) situated outside the cowhouse unit, which may or may not be roofed (10).

7. Cubicle cowhouse according to one or more of the preceding claims, characterised in that the raised cubicle elements (7) are designed in such a way that the standard railings (8) can be shifted, exchanged or replaced as desired, in order to be able to adapt the length (70, 71, 72) and the width (61...67) of the cubicles (6) and the number for housing of adult and/or young animals and/or calves.

fig-1a

fig-1b

fig-1c

fig-2a

0 168 845

Fig-2b

Fig-3

fig-4a

fig-4b

fig-4c

fig-4d

## Fig-5a

## Fig-5b

## Fig-6a

## Fig-6b

**European Patent Office**

**EUROPEAN SEARCH REPORT**

EP 85 20 0227

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 225 739 (BRODRICK)<br>* Figures 1-3; column 2, lines 3-62; column 9, lines 24-39 * | 1 | A 01 K 1/00 |
| A | | 4,5 | |
| | --- | | |
| Y | US-A-3 556 055 (WENGER)<br>* Figures 1,2,5; column 3, line 55 - column 4, line 14 * | 1 | |
| | --- | | |
| A | US-A-3 421 478 (WARMERDAM)<br>* the whole document * | 7 | |
| | ----- | | |

TECHNICAL FIELDS SEARCHED (Int. Cl.4)

A 01 K

The present search report has been drawn up for all claims

| Place of search | Date of completion of the search | Examiner |
|---|---|---|
| THE HAGUE | 04-06-1985 | VILBIG K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82